# EUROPEAN PATENT SPECIFICATION

(11) **EP 2 443 533 B1**
(45) Date of publication and mention of the grant of the patent: **11.07.2018**
(21) Application number: 10717409.6
(22) Date of filing: 04.05.2010
(51) Int. Cl.: G06F 3/041, H01Q 1/24, H01Q 1/22, H01Q 7/00, H01Q 9/16

(54) **TOUCH AND DISPLAY PANEL ANTENNAS**
ANTENNEN FÜR BERÜHRUNGS- UND ANZEIGETAGFELN
ANTENNES DE PANNEAUX TACTILES ET D'AFFICHAGE

(30) Priority: 17.06.2009 US 486486
(43) Date of publication of application: 25.04.2012
(73) Proprietor: Apple Inc., Cupertino, CA 95014 (US)
(72) Inventor: SPRINGER, Gregory, Allen, Cupertino, CA 95014 (US); CHIANG, Bing, Cupertino, CA 95014 (US); KOUGH, Douglas, Blake, Cupertino, CA 95014 (US); AYALA VAZQUEZ, Enrique, Cupertino, CA 95014 (US); XU, Hao, Cupertino, CA 95014 (US)
(74) Representative: Froud, Christopher Andrew
(86) International application number: PCT/US2010/033577
(87) International publication number: WO 2010/147708

(56) References cited:
- EP-B1- 1 161 719
- JP-A- 2002 215 330
- JP-A- 2003 280 815
- JP-A- 2004 005 516

## Description

### Background

This relates generally to electronic device antennas, and, more particularly, to antennas for electronic device display and touch panels.

Electronic devices such as handheld electronic devices are becoming increasingly popular. Examples of handheld devices include handheld computers, cellular telephones, media players, and hybrid devices that include the functionality of multiple devices of this type.

Devices such as these are often provided with wireless communications capabilities. For example, electronic devices may use long-range wireless communications circuitry such as cellular telephone circuitry to communicate using cellular telephone bands at 850 MHz, 900 MHz, 1800 MHz, and 1900 MHz (e.g., the main Global System for Mobile Communications or GSM cellular telephone bands) . Long-range wireless communications circuitry may also handle the 2100 MHz band. Electronic devices may use short-range wireless communications links to handle communications with nearby equipment. For example, electronic devices may communicate using the WiFi® (IEEE 802.11) bands at 2.4 GHz and 5 GHz (sometimes referred to as local area network bands) and the Bluetooth® band at 2.4 GHz.

It can be difficult to incorporate antennas successfully into an electronic device. Some electronic devices are manufactured with small form factors, so space for antennas is limited. Antenna operation can also be blocked by intervening metal structures. This can make it difficult to implement an antenna in an electronic device that contains conductive display structures, conductive housing walls, or other conductive structures that can potentially block radio-frequency signals. It would therefore be desirable to be able to provide improved antennas for wireless electronic devices.

JP 2004 005516 discloses an input device provided with a touch panel, and a radio communication port, the radio communication port having an antenna port arranged in the periphery of a predetermined area.

JP 2002 215330 discloses a user interface device, touch panel, membrane switch, and a method of manufacturing the user interface device. JP 2003 280815 discloses a touch panel with antenna.

EP 1 161 719 B1 discloses a laptop touchpad with integrated antenna. The appended claims are characterised over this document.

### Summary

According to a first aspect of the invention there is provided a touch screen display according to claim 1.

Electronic devices such as handheld electronic devices and other portable electronic devices may be provided with planar dielectric members. The planar dielectric members may be sheets of glass or plastic and may be used in forming structures such as touch pads and displays. The planar dielectric members may be provided
with one or more antenna traces.

The antenna traces on the planar dielectric members may form antennas such as monopole antennas, dipole antennas, slot antennas, loop antennas, etc. An electronic device containing a planar dielectric member on which the antenna traces have been formed may contain radio-frequency transceiver circuitry. A radio-frequency signal path may be provided that couples the transceiver circuitry to the antenna traces. The radio-frequency signal path may include a coaxial cable transmission line, a flex circuit transmission line, and electrical connectors such as spring-loaded pins and springs.

A display or a touch panel may have a planar dielectric member with an active central area that is occupied with light-emitting structures and/or touch sensors. The planar dielectric member may also have an inactive region that is free of touch sensor electrodes and display structures (e.g., an inactive region without light-emitting structures such as backlit liquid crystal diode structures or light-emitting diode cells). The antenna traces may be formed in these inactive regions or may be formed within the active regions. For example, a loop antenna may be formed in the active portion of a touch panel by surrounding indium tin oxide sensor electrodes with an antenna trace.

The antenna traces may be formed from transparent conductive materials such as indium tin oxide or may be formed from conductive materials such as copper. An opaque layer may be interposed between the antenna traces and the interior surface of the planar dielectric layer. The opaque layer may be formed from structures that are opaque to visible light but that are transparent to radio-frequency signals. This allows the antenna traces under the opaque layer to function satisfactorily without being blocked by the presence of the opaque layer.

Further features of the invention, its nature and various advantages will be more apparent from the accompanying drawings and the following detailed description of the preferred embodiments.

### Brief Description of the Drawings

FIG. 1 is a perspective view of an illustrative electronic device with an antenna in accordance with an embodiment of the present invention.
FIG. 2 is a perspective view of another illustrative electronic device with an antenna in accordance with an embodiment of the present invention.
FIG. 3 is a cross-sectional side view of illustrative antenna structures in accordance with an embodiment of the present invention.
FIG. 4 is a schematic diagram of an illustrative electronic device with antenna structures in accordance with an embodiment of the present invention.
FIG. 5 is a cross-sectional side view of an illustrative electronic device with a display or touch panel having antenna structures in accordance with an embodiment of the present invention.
FIG. 6 is a perspective view of an illustrative display or touch panel with antenna structures in accordance with an embodiment of the present invention.
FIG. 7 is a view of an illustrative display or touch panel having capacitive touch screen sensor structures and antenna structures based on monopole and loop antenna configurations in accordance with an embodiment of the present invention.
FIG. 8 is a view of an illustrative display or touch panel having capacitive touch screen sensor structures and antenna structures based on a slot antenna configuration in accordance with an embodiment of the present invention.
FIG. 9 is a side view showing how components such as radio-frequency transceiver components may be electrically coupled to an antenna using spring-loaded pins in accordance with an embodiment of the present invention.
FIG. 10 is a side view showing how components such as radio-frequency transceiver components may be electrically coupled to an antenna using springs in accordance with an embodiment of the present invention.
FIG. 11 is a side view showing how components such as radio-frequency transceiver components may be electrically coupled to an antenna using a flex circuit in accordance with an embodiment of the present invention.

### Detailed Description

Electronic devices may be provided with wireless communications circuitry. The wireless communications circuitry may be used to support wireless communications in one or more wireless communications bands. Antenna structures in an electronic device may be used in transmitting and receiving radio-frequency signals. The electronic device may have a display. The electronic device may also have a touch panel. The touch panel may be used in forming a touch sensitive input device such as a touch pad. If desired, the touch panel may be integrated into the display to form a touch-sensitive screen.

Some or all of the antenna structures for the device may be constructed on the display or touch panel. For example, antenna traces may be formed on the underside of a sheet of display glass or other transparent display panel. Antenna traces may also be formed on the underside of a touch panel. The touch panel on which the antenna traces are formed in this way may be a stand-alone touch panel for a touch pad or other touch surface or may be integrated into a display unit to form a touch-sensitive display.

The antenna structures may be electrically connected to radio-frequency transceiver circuitry using electrical paths that include spring-loaded pins, flex circuit paths, springs, etc. By forming antennas in this way, an electronic device may be formed in a more compact and less complex fashion than might otherwise be possible. During operation, radio-frequency antenna signals may be conveyed between the antenna and external sources through the display or touch panel itself, thereby helping to improve antenna coverage.

Any suitable electronic devices may be provided with antennas such as these. As an example, antennas may be formed in electronic devices such as desktop computers with displays, in laptop computer displays and touch panels, in the displays of televisions or other consumer electronics equipment, etc. With one suitable configuration, the antennas are formed as part of the displays or touch panels used in relatively compact electronic devices in which interior space can be valuable. The compact devices may be portable electronic devices.

Portable electronic devices that may be provided with display and touch panel antennas include laptop computers and small portable computers such as ultraportable computers, netbook computers, and tablet computers. Portable electronic devices may also be somewhat smaller devices. Examples of smaller portable electronic devices that may be provided with display and touch panel antennas include wrist-watch devices, pendant devices, headphone and earpiece devices, and other wearable and miniature devices. With one suitable arrangement, the portable electronic devices are handheld electronic devices such as cellular telephones.

Space is at a premium in portable electronic devices and housings are sometimes constructed from conductive materials that block antenna signals. Arrangements in which antenna structures are formed as part of a display or touch panel can help address these challenges. For example, configurations in which antenna structures are formed on the underside of a display or touch sensitive panel may help to conserve space and can reduce part counts. Displays and touch panels are sometimes mounted in exposed portions of a portable electronic device (e.g., the front or top surface of the device), which can help antennas that are formed as part of these components avoid the radio-frequency signal blocking problems associated with the use of conductive housings. The use of display and touch panel antennas in portable devices such as portable computers and handheld devices is sometimes described herein as an example, but, in general, any suitable electronic device may be provided with a display or touch panel antenna if desired.

Handheld devices that may be provided with display and touch panel antennas include cellular telephones, media players with wireless communications capabilities, handheld computers (also sometimes called personal digital assistants), remote controllers, global positioning system (GPS) devices, and handheld gaming devices. Handheld devices and other portable devices may include the functionality of multiple conventional devices. As an example, a handheld device with cellular telephone functions may include computing equipment resources that allow the handheld device to run games, media player applications, web browsers, productivity software, and other code.

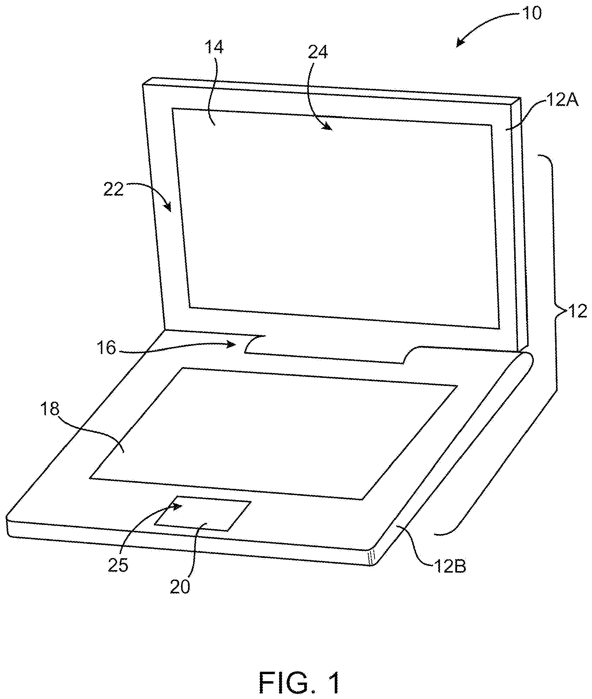

An illustrative portable device such as a portable computer that may include a touch panel or display antenna is shown in FIG. 1. As shown in FIG. 1, device 10 may be a portable computer having a housing such as housing 12. Housing 12 may have an upper portion such as upper housing 12A, which is sometimes referred to as a lid or cover. Housing 12 may also have a lower portion such as lower housing 12B, which is sometimes referred to as the housing base or main unit. Housing portions 12A and 12B may be pivotably attached to each other using a hinge structure such as hinge 16 (sometimes referred to as a clutch barrel hinge). Display 14 may be mounted in upper housing 12A. Other components such as keyboard 18 and touch pad 20 may be mounted in lower housing 12B.

Housing 12, which is sometimes referred to as a case, may be formed of any suitable materials including, plastic, wood, glass, ceramics, metal, or other suitable materials, or a combination of these materials. In some situations, housing 12 may be a dielectric or other low-conductivity material, so that the operation of conductive antenna elements that are located in proximity to housing 12 is not disrupted. In other situations, housing 12 may be formed from metal elements. An advantage of forming housing 12 from metal or other structurally sound conductive materials is that this may improve device aesthetics and may help improve durability and portability.

In configurations for device 10 in which housing 12 is formed from conductive materials, it may be advantageous to form an antenna for device 10 from part of a component such as display 14 or touch pad 20. The exposed faces of components such as display 14 and touch pad 20 need not be covered by metal, so radio-frequency signals can be transmitted and received through these components, even when housing 12 is formed from conductive materials.

Any suitable type of antenna may be used to support wireless communications in device 10. Examples of suitable antenna types include antennas with resonating elements that are formed from a patch antenna structure, a planar inverted-F antenna structure, a helical antenna structure, etc. To minimize device volume and to avoid issues such as signal blocking by conductive housing walls, one or more of these antennas may be formed as part of a component such as display 14 and/or touch pad 20 that is not covered with signal blocking conductive structures. The antennas may, for example, be formed on the underside of a display panel or touch panel in a portion of the panel that is covered only with dielectric (e.g., a portion of the panel covered by a plastic housing structure or bezel such as the portion of housing 12A that is shown as covering the edge of display 14 in region 22 of FIG. 1) or that is completely uncovered (e.g., when forming the antenna in exposed region 25 of touch pad panel 20 or in exposed region 24 at the upper edge of display 14).

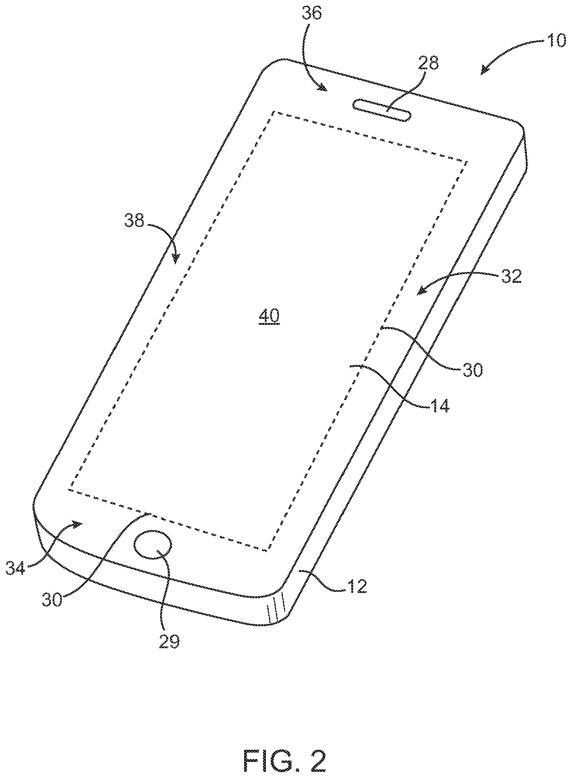

Another illustrative electronic device arrangement that may be used for device 10 is shown in FIG. 2. As shown in FIG. 2, device 10 may be a handheld electronic device having a housing such as housing 12 and a planar front surface on which display 14 is mounted. Components such as speaker port 28 and menu button 29 may, if desired, protrude through portions of display 14 (i.e., its associated glass cover).

Display 14 may be, for example, a touch sensitive display that contains both light-emitting components and touch sensitive components. The light-emitting components may be individually lit pixels such as plasma cell pixels or light-emitting diode pixels or may be backlit liquid crystal display (LCD) cells. LCD cells may emit light that is provided by a fluorescent light backlight or a light-emitting diode backlight source (as examples). The light-emitting structures control the light that passes through the display and thereby serve as light-controlling structures that form a digitally controllable image for the display (e.g., text or video). With this type of display arrangement, light may be emitted from active central region 40 of display 14, but not from inactive peripheral regions such as right-hand edge 32, left-hand edge 38, upper portion 36, and lower edge region 34. These peripheral regions may have an undercoating of an opaque substance such as a black ink (as an example) to help cover underlying structures from view.

Touch sensitive structures may be confined to inner region 40 of display 14 or may extend across larger or smaller portions of the exposed surface of display 14. Dashed line 30 shows a possible dividing line between inner region 40 and peripheral regions 32, 34, 36, and 38. Within the region encompassed by dashed line 30, display 14 may contain light emitting structures and touch sensitive structures. These structures may be mounted to the underside of a transparent planar structure such as a glass panel that forms the exposed surface for display 14. Antennas may be formed within region 40 or outside of the region enclosed by dashed line 30. For example, antenna traces may be formed on the underside of the touch screen panel 14 in peripheral regions 32, 34, 36, or 38.

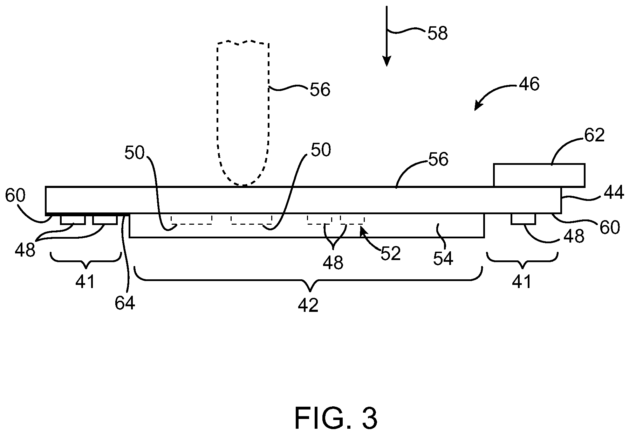

A cross-sectional side view of an illustrative electronic component for device 10 such as a display or touch panel that may be provided with antenna structures is shown in FIG. 3. As shown in FIG. 3, electronic component 46 may have a planar member such as planar member 44. Planar member 44 may have any suitable shape. For example, planar member 44 may be rectangular (when viewed from direction 58).

Planar member 44 may have a planar upper (exposed) surface 56. Planar member 44 may be formed from dielectric materials and/or conductive materials. In display structures, planar member 44 may, for example, be formed from a planar dielectric member such as glass that is transparent to visible light. This allows visual information from the display to pass through member 44 from its interior surface to its exterior surface (surface 56) to be viewed by a user. In touch displays, touch pads, and other touch sensitive components that sense the presence of external objects such as user finger 56 by detecting capacitance changes, planar member 44 may be formed from a dielectric. This allows changes in capacitance to be detected by sensors that are formed on the underside of member 44. Examples of dielectrics that can be used for planar member 44 are glass, polycarbonate, other rigid and flexible plastics, polyimide (e.g., as part of a flex circuit), polyester films such as polyethylene terephthalate (PET) films, crystalline substances, combinations of plastics and glasses or other transparent materials, opaque materials (e.g., opaque plastics or glasses), colored translucent materials, etc.

Some types of dielectric are more suited than others when forming particular types of electronic components. For example, when component 46 is a display it may be desirable to form planar member 44 from a sheet of transparent plastic or glass. When component 46 is a touch pad it may be desirable to form planar member 44 from an opaque plastic or a glass that is opaque or that is covered with an opaque substance. If desired, different surface portions of planar member 44 may be coated with different substances. For example, the entire exterior of planar member 44 (i.e., all of exposed surface 56) may be provided with an abrasion resistance coating or an antireflection coating (as an example). On the underside of component 46, peripheral regions such as peripheral regions 41 (which may extend around structure 46 as with peripheral regions 32, 34, 36, and 38 of FIG. 2) may be undercoated with an opaque material such as black ink, whereas central region 42 may be uncoated.

In region 42, component 46 may be provided with structures such as structure 54. Structure 54 may include light emitting structures (for a display) and/or touch sensing components (e.g., for a touch screen or touch pad). Structure 54 may, for example, contain traces such as traces 50 that are used in forming capacitance sensing electrodes (e.g., for a capacitive touch sensor). Traces 50 may be formed from a conductive material that is transparent to visible light such as indium tin oxide (ITO) or other suitable conductive materials. If desired, touch panel functionality may be provided for component 46 using other touch technologies (e.g., resistive touch sensors, surface acoustic wave techniques, infrared beam sensors, etc.). The use of touch panels for touch pads and touch screens that are formed from capacitive touch sensors is merely illustrative. In addition to traces 50 (e.g., transparent ITO electrodes for a capacitive touch sensor), structure 54 may contain additional structures such as light emitting diodes or liquid crystals, polarizers, filters, antireflection coatings, brightness enhancement films, diffusers, etc. When component 46 is a display, the display may use any suitable display components such as liquid crystal display (LCD) components, plasma display components, organic light-emitting diode (OLED) components, etc.

Antenna structures may be formed using traces such as traces 48. These traces may be formed on the underside of one or more of the structures associated with electronic component 46. For example, traces 48 may be formed on the planar lower surface 60 of planar member 44. Antenna traces 48 may be formed from conductive materials such as metal and conductive semiconductors. Examples of conductive materials that may be used for antenna traces 48 include copper, gold, and indium tin oxide (ITO). Combinations of these materials and other materials (e.g., metal including elemental metal and metal alloys, semiconductors, etc.) may also be used in forming antenna traces 48. If desired, traces 48 may have some portions that are formed from metal (e.g., copper) and some portions that are formed from transparent conductive materials such as ITO. Traces 48 may also be formed exclusively from a single material (e.g., copper or ITO). These are merely illustrative examples. In general, antenna traces 48 may be formed from any suitable conductive materials.

Antenna traces 48 may be formed in any suitable portion of electronic component 46. With one suitable arrangement, which is sometimes described herein as an example, antenna traces 48 are formed on a planar surface such as planar interior surface 60 of planar member 44. Antenna traces 48 may also be formed on other planar surfaces or nonplanar surfaces if desired. The example of FIG. 3 in which antenna traces 48 are formed on the underside of planar dielectric member 44 (e.g., a touch panel associated with a touch screen or touch pad or a display panel associated with a non-touch display) are merely illustrative.

Antenna traces 48 may be formed within central (active region 42) of component 46. For example, antenna traces 48 may be formed in an interior portion of region 42 such as region 52. When formed in central region 42 of an electronic component such as a display, it may be desirable to form some or all of antenna traces 48 from transparent conductive materials such as ITO, as this allows light from underlying light emitting structures 54 (e.g., illuminated LCD or LED structures) to pass unimpeded to exterior surface 56. When formed in central region 42 of a touch-sensitive device that does not have display capabilities, traces 48 may be formed from transparent materials or opaque materials (e.g., copper). When formed in peripheral regions such as regions 41, antenna traces 48 may be formed from conductive materials such as copper or transparent conductive materials such as ITO. Materials such as copper can be particularly satisfactory to use in antenna traces 48 in peripheral regions 41, because copper exhibits a high conductivity and thereby facilitates good antenna performance and because traces 48 in regions 41 can be blocked from view by suitable opaque structures.

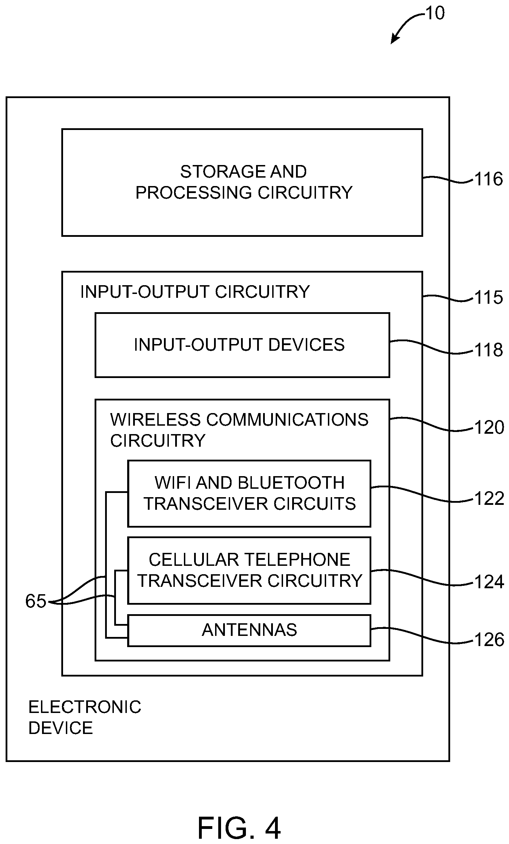

Traces 48 in peripheral regions 41 can be blocked from view using any suitable technique. As an example, traces 48 in regions 41 can be blocked from view using opaque members such as an overlying opaque plastic bezel or other dielectric member (shown as member 62 above right-hand region 41 in FIG. 3). Traces 48 in regions 41 can also be blocked from view by forming a layer of an opaque substance on underside surface 60 of planar member 44 in regions 41 (shown as opaque layer 64 in left-hand peripheral region 41 of FIG. 4). Opaque layer 64 and opaque structure 62 may be formed from any suitable materials that are transparent to radio-frequency signals in the communications bands being used by the antenna formed from underlying antenna traces 48. Examples of opaque structures 62 include plastic, opaque glass, layers of plastic and glass or other dielectrics, etc. Examples of opaque layers 64 include ink (e.g., black ink), paint, polymers, metals that are sufficiently thin to have a high resistivity and therefore high radio-frequency signal transparency, etc. Layers such as layer 64 of FIG. 3, antenna traces 48, and touch sensor electrodes 50 may be deposited by screen printing, painting, spray coating, evaporation, sputtering, other physical vapor deposition techniques, chemical vapor deposition, electrochemical deposition (e.g., electroplating), combinations of these techniques, etc.

An antenna or antennas formed from antenna traces 48 may be coupled to wireless communications circuitry in device 10 using conductive paths. A schematic diagram of device 10 showing how wireless communications circuitry 20 may include various radio-frequency transceiver circuits such as transceiver circuits 122 and 124 is shown in FIG. 4.
Electronic device 10 may be a portable computer such as a laptop computer, a portable tablet computer, a mobile telephone, a mobile telephone with media player capabilities, a handheld computer, a remote control, a game player, a global positioning system (GPS) device, a combination of such devices, or any other suitable electronic device.

As shown in FIG. 4, electronic device 10 may include storage and processing circuitry 116. Storage and processing circuitry 116 may include one or more different types of storage such as hard disk drive storage, nonvolatile memory (e.g., flash memory or other electrically-programmable-read-only memory), volatile memory (e.g., static or dynamic random-access-memory), etc. Processing circuitry in storage and processing circuitry 116 may be used to control the operation of device 10. Processing circuitry 116 may be based on a processor such as a microprocessor and other suitable integrated circuits. With one suitable arrangement, storage and processing circuitry 116 may be used to run software on device 10, such as internet browsing applications, voice-over-internet-protocol (VOIP) telephone call applications, email applications, media playback applications, operating system functions, etc. Storage and processing circuitry 116 may be used in implementing suitable communications protocols. Communications protocols that may be implemented using storage and processing circuitry 116 include internet protocols, wireless local area network protocols (e.g., IEEE 802.11 protocols -- sometimes referred to as WiFi®), protocols for other short-range wireless communications links such as the Bluetooth® protocol, etc.

Input-output circuitry 114 may be used to allow data to be supplied to device 10 and to allow data to be provided from device 10 to external devices. Input-output devices 118 such as touch screens and other user input interface are examples of input-output circuitry 114. Input-output devices 118 may also include user input-output devices such as buttons, joysticks, click wheels, scrolling wheels, touch pads, key pads, keyboards, microphones, cameras, etc. A user can control the operation of device 10 by supplying commands through such user input devices. Display and audio devices may be included in devices 118 such as liquid-crystal display (LCD) screens, light-emitting diodes (LEDs), organic light-emitting diodes (OLEDs), and other components that present visual information and status data. Display and audio components in input-output devices 118 may also include audio equipment such as speakers and other devices for creating sound. If desired, input-output devices 118 may contain audio-video interface equipment such as jacks and other connectors for external headphones and monitors.

Wireless communications circuitry 120 may include radio-frequency (RF) transceiver circuitry formed from one or more integrated circuits, power amplifier circuitry, low-noise input amplifiers, passive RF components, one or more antennas, and other circuitry for handling RF wireless signals. Wireless signals can also be sent using light (e.g., using infrared communications). Wireless communications circuitry 120 may include radio-frequency transceiver circuits for handling multiple radio-frequency communications bands. For example, circuitry 120 may include transceiver circuitry 122 that handles 2.4 GHz and 5 GHz bands for WiFi (IEEE 802.11) communications and the 2.4 GHz Bluetooth communications band. Circuitry 120 may also include cellular telephone transceiver circuitry 124 for handling wireless communications in cellular telephone bands such as the GSM bands at 850 MHz, 900 MHz, 1800 MHz, and 1900 MHz, and the 2100 MHz data band (as examples). Wireless communications circuitry 120 can include circuitry for other short-range and long-range wireless links if desired. For example, wireless communications circuitry 120 may include global positioning system (GPS) receiver equipment, wireless circuitry for receiving radio and television signals, paging circuits, etc. In WiFi and Bluetooth links and other short-range wireless links, wireless signals are typically used to convey data over tens or hundreds of feet. In cellular telephone links and other long-range links, wireless signals are typically used to convey data over thousands of feet or miles.

Wireless communications circuitry 120 may include antennas 26. Some or all of antennas 26 may be formed from antenna traces on planar member 44 of device 46 such as antenna traces 48 of FIG. 3. Antennas 26 may, in general, be formed using any suitable antenna types. Examples of suitable antenna types for antennas 26 include antennas with resonating elements that are formed from patch antenna structures, inverted-F antenna structures, closed and open slot antenna structures, loop antenna structures, monopoles, dipoles, planar inverted-F antenna structures, hybrids of these designs, etc. Different types of antennas may be used for different bands and combinations of bands and with different types of components 46. For example, it may be desirable to form one type of antenna in forming a local wireless link antenna and another type of antenna may be used in forming a remote wireless link. Some or all of these antenna types may be implemented by forming antenna traces 48 on surface 60 of planer dielectric member 44, as shown in FIG. 3.

Paths such as paths 65 may be used to convey radio-frequency signals between transceivers 122 and 124 and antennas 26. Radio-frequency transceivers such as radio-frequency transceivers 122 and 124 may be implemented using one or more integrated circuits and associated components (e.g., switching circuits, matching network components such as discrete inductors, capacitors, and resistors, and integrated circuit filter networks, etc.). These devices may be mounted on any suitable mounting structures. With one suitable arrangement, transceiver integrated circuits may be mounted on a printed circuit board. Paths 65 may be used to interconnect the transceiver integrated circuits and other components on the printed circuit board with antenna traces 48 on planar dielectric member 44 in electronic component 46. Paths 65 may include any suitable conductive pathways over which radio-frequency signals may be conveyed including transmission line path structures such as coaxial cables, microstrip transmission lines, etc.

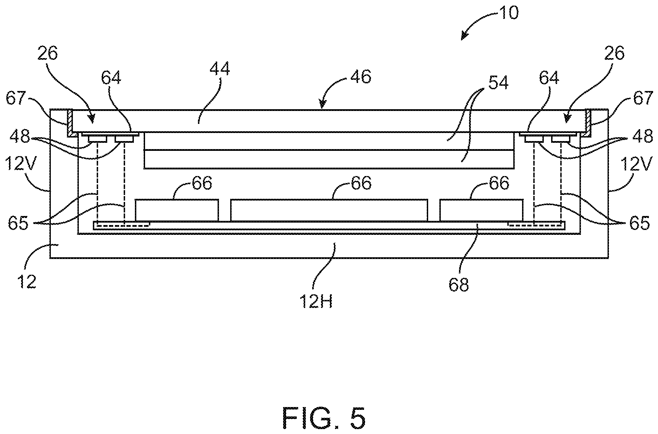

A cross-sectional side view of an illustrative device 10 showing how transceiver integrated circuits and other integrated circuits 66 may be mounted on a printed circuit board such as printed circuit board 68 is shown in FIG. 5. As shown in FIG. 5, printed circuit board 68 may be mounted within housing 12 of electronic device 10. Housing 12 may include conductive vertical sidewalls such as sidewalls 12V and a conductive horizontal planar rear wall 12H. This is merely illustrative. In general, housing 12 may include wall structures in any suitable configuration. Walls may be thin (e.g., when formed from a metal sheet) or thick (e.g., when formed from a block of milled or cast metal). The walls in a given housing may also have more than one thickness (e.g., when housing 12 is formed from a unitary block of aluminum or other metal that has been machined to form a desired housing shape).

There is one printed circuit board 68 in the example of FIG. 5 (e.g., a main logic board), but, in general, there may be any suitable number of printed circuit boards 68 in a given electronic device (e.g., one circuit board, two circuit boards, three circuit boards, etc.). Printed circuit boards such as printed circuit board 68 may be formed from a rigid printed circuit board material such as fiberglass-filled epoxy (e.g., FR4) or from a flexible printed circuit board substrates ("flex circuits") such as polyimide.

As shown in FIG. 5, paths such as paths 65 may be used to interconnect integrated circuits 66 and the antennas 26 that are formed from antenna traces 48. There are two antennas 26 in the example of FIG. 5, but there may, in general be any suitable number of antennas 26 in device 10 and any suitable number of these antennas may be formed from antenna traces 48 in electronic component 46. Component 46 may include a glass or plastic layer or other planar dielectric layer 44 and underlying structures 54 for implementing functions such as display functions and touch sensor functions.

Planar dielectric member 44 may be mounted in housing 12 using gaskets 67. Gaskets 67 may be, for example, elastomeric gaskets that help to relieve stress between planar dielectric member 44 and the inner surfaces of sidewalls 12V.

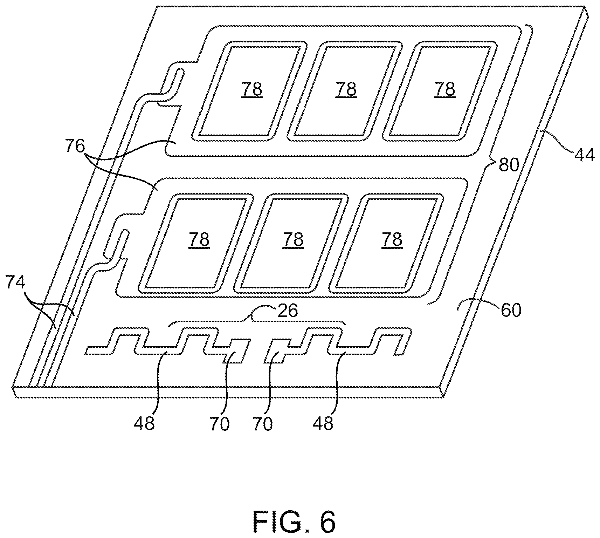

FIG. 6 is a perspective view of an illustrative planar dielectric member 44 showing how antenna traces 48 may be formed on member 44 in a dipole antenna configuration. Contact pad regions 70 and 72 may serve as respective positive and ground antenna feed terminals when feeding dipole antenna 26. Traces 48 may be straight, curved, or may have bends as shown in FIG. 6. Traces 48 may also have one or more branches of different lengths.

Touch sensor structures may be formed on the same surface (surface 60) of planar member 44 as antenna traces 48. In the example of FIG. 6, touch sensor structures (electrodes) 80 include touch sensor outer traces 76 and touch sensor pads 78. Traces 76 and the traces that make up sensor pads 78 form capacitors for a capacitive touch sensor. Traces such as traces 74 may be used to connect the touch sensor structures to touch sensor processing circuitry. Traces such as traces 76 and 78 may be formed from a transparent conductive material such as indium tin oxide (as an example). Traces such as traces 74 may be formed from indium tin oxide or from other conductive materials such as copper. Antenna traces 48 may be formed from a transparent conductive material such as indium tin oxide or a metal such as copper. When a user brings an external object such as a finger into the vicinity of one of pads 78 (either by directly touching that pad or by bringing the external object in close proximity to the pad), a change in capacitance can be sensed by the sensor processing circuitry. By forming both touch panel electrodes 80 and antenna traces 48 on the same planar dielectric member, part count and device complexity may be reduced and reliability may be enhanced.

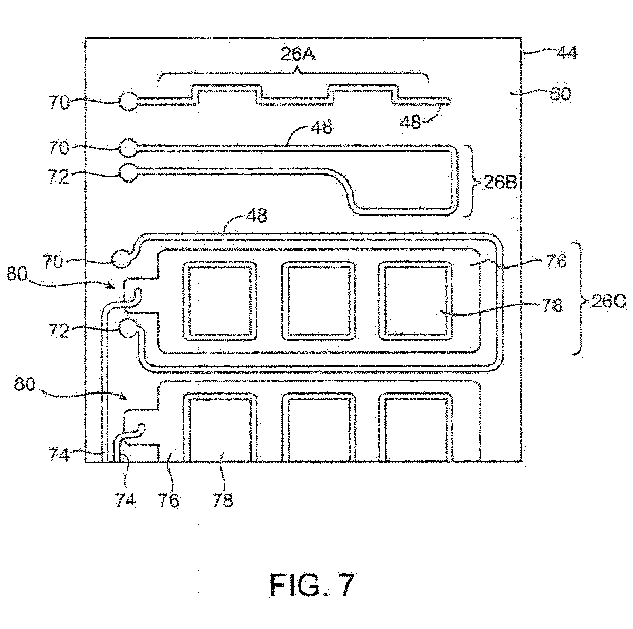

The formation of a dipole antenna in the FIG. 6 example is merely illustrative. Any suitable antenna type may be used in forming antennas 26 from antenna traces 48 if desired. As shown in FIG. 7, for example, antenna traces 48 may be configured to form a monopole antenna (antenna 26A) or a loop antenna (e.g., loop antenna 26B or loop antenna 26C). In this example, loop antenna 26C surrounds one of the touch sensors.

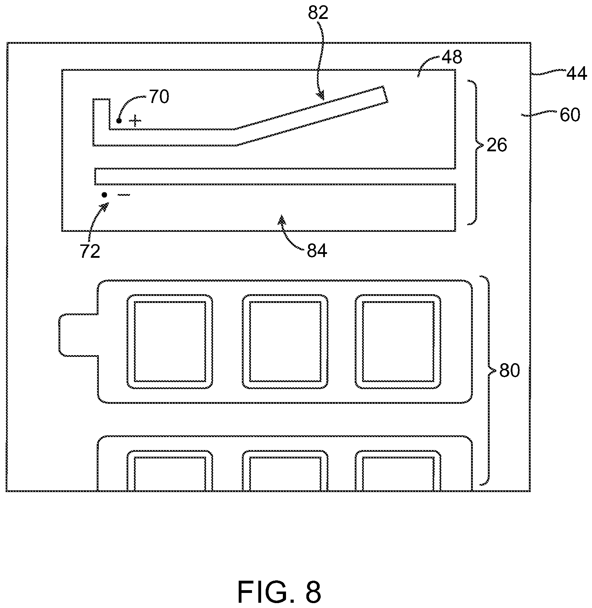

Another illustrative arrangement is shown in FIG. 8. In the FIG. 8 arrangement, antenna 26 is formed form an antenna trace 48 that has been configured to form closed slot 82 and open slot 84. Slots 82 and 84 may be fed using a transmission line coupled to positive antenna feed terminal contact region 70 and ground antenna feed terminal contact region 72. During operation, slots 82 and 84 serve as antenna resonating element structures that resonate in desired communications bands of interest (e.g., a first band such as a 2.4 GHz band and a second band such as a 5 GHz band as examples).

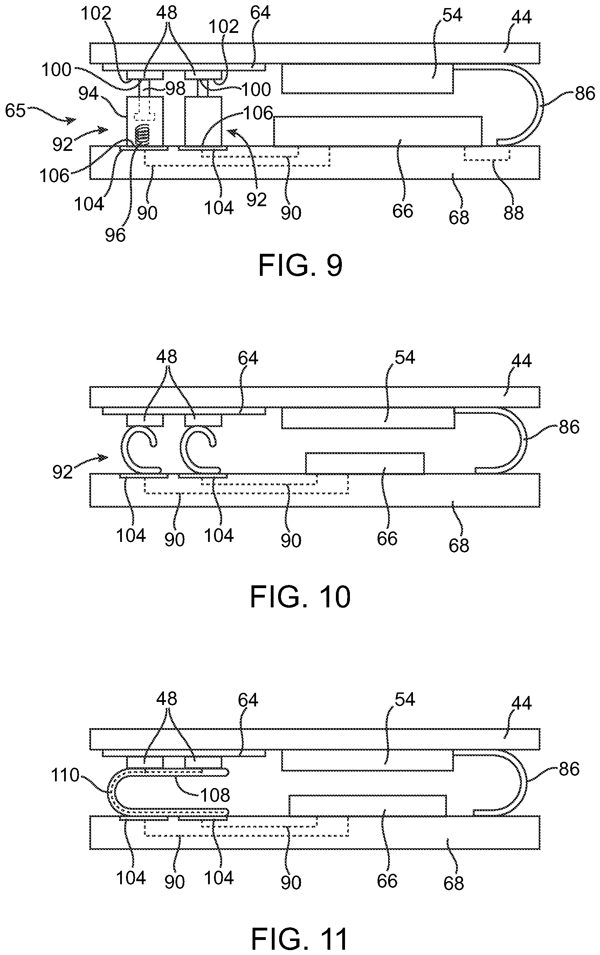

Transmission line paths 65 may include electrical connector structures that facilitate formation of electrical connections between transceivers and other integrated circuits 66 on circuit boards 68 and antenna traces 48 on planar dielectric member 44. With the illustrative arrangement shown in FIG. 9, the electrical connector structures 92 have been formed from spring-loaded pins. Each spring-loaded pin may have a barrel member 94 containing a hollow bore in which a shaft 98 reciprocates. A spring such as spring 96 in each pin helps to bias shaft 98 upwards against antenna traces 48 (i.e., against a contact pad portion of traces 48 such as contact pad regions 70 and 72 of FIGS. 6, 7, and 8). When biased in this way, upper surfaces 100 of pins 92 bear against lower surfaces 102 of antenna traces 48. Lower surfaces 106 of pins 92 are connected to electrical contact pads such as pads 104 in circuit board 68. In turn, pads 104 may be connected to transceiver integrated circuit 66 and other components on circuit board 68 using paths such as paths 90. Paths 90 may be formed from internal conductive traces (e.g., copper traces) in board 68 or using conductive traces on the surface of circuit board 68. With this type of arrangement, circuitry on circuit board 68 is electrically connected to the antenna formed from antenna traces 48 using pins 92 and the other structures of paths 65.

Components 54 such as display and touch panel components may be electrically connected to circuitry on board 68 similarly. For example, components 54 may be connected to board 68 using path structures 86. Circuit board traces 88 may be used to connect path 86 to circuitry on board 68 such as integrated circuit 66. Path structures 86 may be formed from a flex circuit, a cable, or other suitable communications path structures. This type of path may, if desired, include electrical connectors such as pins 92.

As shown in FIG. 10, electrical connector structures 92 may be formed from spring members. Each spring may be formed from metal or other suitable resilient conductive material. When compressed as shown in FIG. 10, the upper portion of each spring 92 may bear against a contact pad region (e.g., regions 70 and 72 of FIGS. 6, 7, and 8) on a respective antenna trace structure 48. The lower portion of each spring 92 may be electrically connected to a respective pad 104 that is interconnected to circuitry on circuit board 68 such as transceiver circuits 122 and 124 (e.g., integrated circuit 66) .

FIG. 11 shows how a flexible transmission line path such as transmission line 108 may be used to connect pads 104 to antenna traces 48. Transmission line 108 in FIG. 11 may contain conductive lines 110. Transmission line 108 may be a coaxial cable, a flex circuit, or other suitable transmission line structure. The conductive lines in transmission line 108 may be connected between a pair of pads such as pads 104 on circuit board 68 and a pair of respective contact pad regions (i.e., regions 70 and 72 of FIGS. 6, 7, and 8) on antenna traces 48, thereby coupling transceiver circuitry on circuit board 68 to the antenna formed from antenna traces 48.

In accordance with an embodiment, a touch screen display is provided that includes a planar dielectric member, touch sensors mounted to the planar dielectric member, light-controlling structures that control light that passes through the planar dielectric member to form an image for the touch screen display, and at least one antenna trace formed on the planar dielectric member.

In accordance with another embodiment, the planar dielectric member includes at least a planar glass member.

In accordance with another embodiment, the touch sensors includes a plurality of electrodes having outer and inner electrode traces that are mounted to an active portion of the planar dielectric member, an inactive portion of the planar dielectric member is free of the plurality of electrodes, and the antenna trace is formed in the inactive portion of the planar dielectric member.

In accordance with another embodiment, the touch sensors include capacitive touch sensors.

In accordance with another embodiment, the touch sensors include traces of indium tin oxide.

In accordance with another embodiment, the antenna trace includes indium tin oxide.

In accordance with another embodiment, the antenna trace includes a metal.

In accordance with another embodiment, the antenna trace includes copper.

In accordance with another embodiment, the touch sensors include indium tin oxide touch sensor electrode structures on the planar dielectric member and the antenna trace forms a loop antenna that surrounds the indium tin oxide touch sensor electrode structures.

In accordance with another embodiment, the touch screen display also includes an opaque layer of material between the antenna trace and the planar dielectric member and the opaque layer of material passes radio-frequency signals from the antenna trace and blocks visible light.

In accordance with another embodiment, the planar dielectric member forms a rectangle, the light-controlling structures are formed in a central active rectangular portion of the planar dielectric member, and the antenna trace is formed on an inactive peripheral region of the planar dielectric member that surrounds the central active rectangular portion.

In accordance with an embodiment, a touch panel is provided that includes a planar dielectric member, touch sensor electrodes formed on the planar dielectric member, and at least one antenna trace formed on the planar dielectric member.

In accordance with another embodiment, the planar dielectric member is opaque and the planar dielectric member forms part of an opaque touch pad.

In accordance with another embodiment, the planar dielectric member has an active portion in which the touch sensor electrodes are formed and has an inactive portion that is free of touch sensor electrodes and the antenna trace is formed in the inactive portion of the planar dielectric member.

In accordance with another embodiment, the antenna trace is configured to form a monopole antenna.

In accordance with another embodiment, the antenna trace is configured to form a dipole antenna.

In accordance with another embodiment, the antenna trace is configured to form a slot antenna.

In accordance with another embodiment, the touch sensor electrodes include indium tin oxide and the antenna trace includes a conductive opaque metal material.

In accordance with an embodiment, an electronic device is provided that includes a circuit board having at least one radio-frequency transceiver integrated circuit, a display having a planar dielectric member with an active central portion through which the display emits light and having an inactive peripheral region, at least one antenna trace formed on the planar dielectric member in the inactive peripheral region, and a radio-frequency signal path that electrically couples the radio-frequency transceiver integrated circuit on the circuit board to the antenna trace.

In accordance with another embodiment, the radio-frequency signal path includes spring-loaded pins.

In accordance with another embodiment, the radio-frequency signal path includes springs.

In accordance with another embodiment, the radio-frequency signal path includes a flex circuit path.

In accordance with another embodiment, the planar dielectric member includes a sheet of glass having an interior surface and the antenna trace is formed on the interior surface.

In accordance with another embodiment, the electronic device also includes an opaque layer interposed between the antenna trace and the sheet of glass and the opaque layer blocks visible light while permitting radio-frequency signals transmitted from the antenna trace to pass through the opaque layer and the sheet of glass.

In accordance with another embodiment, the electronic device also includes a metal housing to which the display screen is mounted.

In accordance with another embodiment, the electronic device also includes capacitive touch sensor structures for the display.

In accordance with another embodiment, the capacitive touch sensor structures include indium tin oxide electrodes formed on an interior surface of the planar dielectric member and the antenna trace is formed in a portion of the planar dielectric member without the indium tin oxide electrodes.

In accordance with another embodiment, the electronic device also includes spring loaded pins in the radio-frequency signal path.

In accordance with another embodiment, the radio-frequency transceiver integrated circuit may be a cellular telephone transceiver or a local area network transceiver.

The foregoing is merely illustrative of the principles of this invention and various modifications can be made by those skilled in the art without departing from the scope of the invention. The foregoing 5 embodiments may be implemented individually or in any combination.

## Claims

1. A touch screen display comprising:
a planar dielectric member (44);
touch sensors (50) mounted to the planar dielectric member (44) ;
at least one antenna trace (48) formed on the planar dielectric member (44);
**characterised in that**:
the antenna trace (48) surrounds one but not all of the touch sensors (50).

2. The touch screen display defined in claim 1 wherein the planar dielectric member (44) comprises at least a planar glass member.

3. The touch screen display defined in claim 1 or 2 further comprising light-controlling structures (54) that control light that passes through the planar dielectric member (44) to form an image for the touch screen display.

4. The touch screen display defined in any preceding claim wherein the touch sensors (50) comprise a plurality of electrodes (80) having outer and inner electrode traces (76, 78) that are mounted to an active portion of the planar dielectric member (44), and wherein an inactive portion of the planar dielectric member (44) is free of the plurality of electrodes.

5. The touch screen display defined in any preceding claim wherein the touch sensors (50) comprise capacitive touch sensors (50).

6. The touch screen display defined in any preceding claim wherein the touch sensors (50) comprise traces of indium tin oxide.

7. The touch screen display defined in any preceding claim wherein the antenna trace (48) comprises indium tin oxide.

8. The touch screen display defined in any preceding claim wherein the touch sensors (50) comprise indium tin oxide touch sensor electrode structures on the planar dielectric member (44), wherein the antenna trace (48) forms a loop antenna (26c) that surrounds the indium tin oxide touch sensor electrode structures.

9. The touch screen display defined in claim 3 or any one of claims 4-8 when dependent on claim 3 wherein the planar dielectric member (44) forms a rectangle and wherein the light-controlling structures (54) are formed in a central active rectangular portion of the planar dielectric member (44).

## Patentansprüche

1. Berührungsbildschirmanzeige umfassend:
ein planares dielektrisches Element (44);
Berührungssensoren (50), die an dem planaren dielektrischen Element (44) angebracht sind;
mindestens eine Antennenspur (48), die auf dem planaren dielektrischen Element (44) ausgebildet ist;
**dadurch gekennzeichnet, dass**:
die Antennenspur (48) eine, aber nicht alle der Berührungssensoren (50) umgibt.

2. Berührungsbildschirmanzeige nach Anspruch 1, wobei das planare dielektrische Element (44) mindestens ein planares Glaselement aufweist.

3. Berührungsbildschirmanzeige nach Anspruch 1 oder 2, die ferner lichtsteuernde Strukturen (54) aufweist, die Licht steuern, das durch das planare dielektrische Element (44) hindurchtritt, um ein Bild für die Berührungsbildschirmanzeige zu bilden.

4. Berührungsbildschirmanzeige nach einem der vorhergehenden Ansprüche, bei dem die Berührungssensoren (50) eine Mehrzahl von Elektroden (80) mit äußeren und inneren Elektrodenspuren (76, 78) aufweisen, die an einem aktiven Abschnitt des planaren dielektrischen Elements (44) montiert sind, und wobei ein inaktiver Abschnitt des planaren dielektrischen Elements (44) frei von der Vielzahl von Elektroden ist.

5. Berührungsbildschirmanzeige, die in irgendeinem vorhergehenden Anspruch definiert ist, wobei die Berührungssensoren (50) kapazitive Berührungssensoren (50) umfassen.

6. Berührungsbildschirmanzeige, die in irgendeinem vorhergehenden Anspruch definiert ist, wobei die Berührungssensoren (50) Spuren von Indiumzinnoxid umfassen.

7. Berührungsbildschirmanzeige, die in irgendeinem vorhergehenden Anspruch definiert ist, wobei die Antennenspur (48) Indiumzinnoxid umfasst.

8. Berührungsbildschirmanzeige, das in irgendeinem vorhergehenden Anspruch definiert ist, wobei die Berührungssensoren (50) Indium-Zinnoxid-Berührungssensorelektrodenstrukturen auf dem planaren dielektrischen Element (44) umfassen, wobei die Antennenspur (48) eine Schleifenantenne (26c) bildet, die die Indium-Zinnoxid-Berührungssensorelektrodenstrukturen umgibt.

9. Berührungsbildschirmanzeige nach Anspruch 3 oder irgendeinem der Ansprüche 4 bis 8, wenn abhängig von Anspruch 3, wobei das planare dielektrische Element (44) ein Rechteck bildet und wobei die lichtsteuernden Strukturen (54) in einem zentralen aktiven rechteckigen Abschnitt des planaren dielektrischen Elements (44) ausgebildet sind.

## Revendications

1. Un afficheur à écran tactile, comprenant :
un organe diélectrique plan (44) ;
des capteurs tactiles (50) montés sur l'organe diélectrique plan (44) ;
au moins une piste d'antenne (48) formée sur l'organe diélectrique plan (44) ;
**caractérisé en ce que** :
la piste d'antenne (48) entoure l'un, mais non la totalité, des capteurs tactiles (50).

2. L'afficheur à écran tactile défini dans la revendication 1, dans lequel l'organe diélectrique plan (44) comprend au moins un organe plan en verre.

3. L'afficheur à écran tactile défini dans la revendication 1 ou 2, comprenant en outre des structures de contrôle de la lumière (54) qui contrôlent la lumière qui passe au travers de l'organe diélectrique plan (44) pour former une image destinée à l'afficheur à écran tactile.

4. L'afficheur à écran tactile défini dans l'une des revendications précédentes, dans lequel les capteurs tactiles (50) comprennent une pluralité d'électrodes (80) possédant des pistes d'électrodes extérieures et intérieures (76, 78) qui sont montées sur une partie active de l'organe diélectrique plan (44), et dans lequel une partie inactive de l'organe diélectrique plan (44) est dépourvue de la pluralité d'électrodes.

5. L'afficheur à écran tactile défini dans l'une des revendications précédentes, dans lequel les capteurs tactiles (50) comprennent des capteurs tactiles capacitifs (50).

6. L'afficheur à écran tactile défini dans l'une des revendications précédentes, dans lequel les capteurs tactiles (50) comprennent des pistes en oxyde indium-étain.

7. L'afficheur à écran tactile défini dans l'une des revendications précédentes, dans lequel la piste d'antenne (48) comprend de l'oxyde d'indium-étain.

8. L'afficheur à écran tactile défini dans l'une des revendications précédentes, dans lequel les capteurs tactiles (50) comprennent des structures d'électrode de capteur tactile en oxyde d'indium-étain sur l'organe diélectrique plan (44), la piste d'antenne (48) formant une antenne boucle (26c) qui entoure les structures d'électrode de capteur tactile en oxyde d'indium-étain.

9. L'afficheur à écran tactile défini dans la revendication 3 ou dans l'une des revendications 4 à 8 prises en dépendance de la revendication 3, dans lequel l'organe diélectrique plan (44) forme un rectangle et dans lequel les structures de contrôle de la lumière (54) sont formées dans une partie rectangulaire active centrale de l'organe diélectrique plan (44).
